(19)

**Europäisches Patentamt**
**European Patent Office**
**Office européen des brevets**

(11) **EP 4 518 413 A1**

(12) **EUROPEAN PATENT APPLICATION**
published in accordance with Art. 153(4) EPC

(43) Date of publication:
**05.03.2025 Bulletin 2025/10**

(21) Application number: **23806972.8**

(22) Date of filing: **17.05.2023**

(51) International Patent Classification (IPC):
*H04W 24/10* (2009.01)

(52) Cooperative Patent Classification (CPC):
**H04B 17/309; H04W 24/10**

(86) International application number:
**PCT/CN2023/094725**

(87) International publication number:
**WO 2023/222021 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.05.2022  CN 202210541819**

(71) Applicant: **Huawei Technologies Co., Ltd.
Shenzhen, Guangdong 518129 (CN)**

(72) Inventors:
 • **BI, Xiaoyan
  Shenzhen, Guangdong 518129 (CN)**

 • **LIU, Yong
  Shenzhen, Guangdong 518129 (CN)**
 • **BALIGH, Mohammadhadi
  Shenzhen, Guangdong 518129 (CN)**
 • **JIANG, Chenglong
  Shenzhen, Guangdong 518129 (CN)**
 • **LIU, Lei
  Shenzhen, Guangdong 518129 (CN)**
 • **DONG, Lei
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **CHANNEL MEASUREMENT METHOD AND APPARATUS**

(57)  This application provides a channel measurement method and apparatus, to reduce calculation complexity of a channel measurement process. The method includes: A terminal device obtains a first reference signal set and a second reference signal set, where the first reference signal set includes N first reference signals, the second reference signal set includes M second reference signals, and M and N are positive integers greater than or equal to 1. The terminal device may further perform channel measurement based on the first reference signal set to obtain first channel information, where a first dimension of the first channel information is less than a quantity of transmit antennas of a first device. The terminal device may further obtain second channel information based on the second reference signal set and the first channel information, where a first dimension of the second channel information is less than the quantity of transmit antennas of the first device.

```
┌─────────────────────────────────┐
│ S201: Obtain a first reference  │
│ signal set and a               │
│ second reference signal set     │
└─────────────────────────────────┘
                │
                ▼
┌─────────────────────────────────┐
│ S202: Perform channel measure-  │
│ ment based on the first         │
│ reference signal set to obtain  │
│ first channel information, where │
│ a first dimension of the first  │
│ channel information is less than │
│ a quantity of transmit antennas │
│ of a sending device             │
└─────────────────────────────────┘
                │
                ▼
┌─────────────────────────────────┐
│ S203: Obtain second channel     │
│ information based on a second    │
│ reference signal and the first   │
│ channel information, where a     │
│ first dimension of the second    │
│ channel information is less than  │
│ the quantity of transmit antennas │
│ of the sending device            │
└─────────────────────────────────┘
```

FIG. 2

EP 4 518 413 A1

**Description**

**CROSS-REFERENCE TO RELATED APPLICATIONS**

This application claims priority to Chinese Patent Application No. 202210541819.3, filed with the China National Intellectual Property Administration on May 17, 2022 and entitled "CHANNEL MEASUREMENT METHOD AND APPARATUS", which is incorporated herein by reference in its entirety.

**TECHNICAL FIELD**

This application relates to the field of mobile communication technologies, and in particular, to a channel measurement method and apparatus.

**BACKGROUND**

In a current multi-input multi-output (multi-input multi-output, MIMO) system, each sending antenna (which is also referred to as a transmit antenna, and may be a virtual transmit antenna or a physical transmit antenna) has an independent channel. For example, in an uplink and a downlink, to implement channel quality measurement in a multi-antenna system, a fifth generation (5$^{th}$ generation, 5G) new radio (new radio, NR) system defines a plurality of reference symbols: a channel state information-reference signal (channel state information-reference signal, CSI-RS), a demodulation reference signal (demodulation reference signal, DMRS), and a sounding reference signal (sounding reference signal, SRS). In a current frequency division duplex (frequency division duplex, FDD) communication mode, a base station sends a downlink CSI-RS reference signal, and a terminal device (user equipment, UE) performs downlink channel measurement by using the CSI-RS, calculates precoding matrix information based on an estimation result, and then feeds back the precoding matrix information to the base station.

However, as a quantity of transmit antennas of the base station increases, currently, calculation complexity of a process in which the UE calculates the precoding matrix information based on the estimation result continuously increases. This causes an excessively large system delay, and further reduces a throughput of an entire system.

**SUMMARY**

This application provides a channel measurement method and apparatus, to reduce calculation complexity of a channel measurement process.

According to a first aspect, this application provides a channel measurement method. The method may be applied to a radio channel measurement scenario, to reduce calculation complexity in a channel measurement process. Specifically, the method may be implemented by a terminal device or a component in the terminal device. The component in this application is, for example, at least one of a processor, a transceiver, a processing module, or a transceiver module. For example, the method is performed by the terminal device. The method includes: The terminal device obtains a first reference signal set and a second reference signal set, where the first reference signal set includes N first reference signals, the second reference signal set includes M second reference signals, and M and N are positive integers greater than or equal to 1. The terminal device may further perform channel measurement based on the first reference signal set to obtain first channel information, where a first dimension of the first channel information is less than a quantity of transmit antennas of a first device. The terminal device may further obtain second channel information based on the second reference signal set and the first channel information, where a first dimension of the second channel information is less than the quantity of transmit antennas of the first device.

According to the first aspect, both first dimensions of the first channel information and the second channel information that are determined by the terminal device are less than the quantity of transmit antennas of the first device. Even if a quantity of transmit antennas of a signal sending device such as a base station continuously increases, a calculation dimension in channel measurement performed by the terminal device is less than the quantity of transmit antennas. Therefore, complexity of calculation performed based on the first channel information and the second channel information can be reduced by reducing data dimensions in a channel measurement process.

In a possible implementation, the first device may be a network device, or the first device may be a terminal device configured to send a reference signal.

In a possible implementation, the terminal device may further obtain first information, where the first information includes a first value, the first value is less than the quantity of transmit antennas of the first device, and the first dimension is less than or equal to the first value.

Based on this implementation, the terminal device may determine the first dimension based on the configured first value, that is, the first dimension is not greater than the first value, so that the calculation complexity can be further reduced. Optionally, the first information may be from the first device, or may be from a network device when the first device is the terminal device, or the first information may be preconfigured or predefined.

In a possible implementation, the first value is less than or equal to N.

Based on this implementation, the calculation complexity can be further reduced.

In a possible implementation, the terminal device may further send an updated first value.

Based on this implementation, the terminal device may update the first value, and may indicate the first value to the first device. For example, when precision of the first channel information is insufficient, the terminal device may update the first value by increasing or decreasing the first value, and send the updated first value to the first device, so that the network device determines a precoding matrix based on the updated first value, to improve channel measurement precision.

In a possible implementation, the terminal device may further send the first channel information and the second channel information.

Based on this implementation, the terminal device may indicate the first channel information and the second channel information of the first dimension. For example, the terminal device sends the first channel information and the second channel information to the first device, so that the first device may determine the precoding matrix based on the first channel information and the second channel information, and perform transmission between the terminal device and the first device via the precoding matrix.

In a possible implementation, the terminal device may further obtain a feedback periodicity of the first channel information and/or a feedback periodicity of the second channel information.

Based on this implementation, the terminal device may send the first channel information and/or the second channel information based on the feedback periodicity of the first channel information and/or the feedback periodicity of the second channel information, to improve a state of periodically feeding back channel information. The feedback periodicity of the first channel information and/or the feedback periodicity of the second channel information may be from the first device, or may be from the network device when the first device is the terminal device, or the feedback periodicity of the first channel information and/or the feedback periodicity of the second channel information may be preconfigured or predefined.

In a possible implementation, the terminal device may further send third channel information, where the third channel information is determined based on the first channel information and the second channel information, and a first dimension of the third channel information is less than the quantity of transmit antennas of the first device.

Based on this implementation, the terminal device may indicate the third channel information. For example, the terminal device sends the third channel information to the first device, so that the first device may determine a precoding matrix based on the third channel information, and perform transmission between the terminal device and the first device via the precoding matrix.

In a possible implementation, the terminal device may further obtain a feedback periodicity of the third channel information.

Based on this implementation, the terminal device may send the third channel information based on the feedback periodicity of the third channel information, to improve a state of periodically feeding back channel information. The feedback periodicity of the third channel information may be from the first device, or may be from the network device when the first device is the terminal device, or the feedback periodicity of the third channel information may be preconfigured or predefined.

In a possible implementation, the terminal device may further obtain second information, where the second information includes at least one of a value of N, resource information of the first reference signal, and a sending periodicity of the first reference signal.

Based on this implementation, the terminal device may obtain the first reference signal set based on the second information. The second information may be for configuring the first reference signal set, or the second information is configuration information of the first reference signal set. The second information may be from the first device, or may be from the network device when the first device is the terminal device, or the second information may be preconfigured or predefined.

In a possible implementation, the terminal device may further obtain third information, where the third information includes at least one of a value of M, resource information of the second reference signal, and a sending periodicity of the second reference signal.

Based on this implementation, the terminal device may obtain the second reference signal set based on the third information. The third information may be for configuring the second reference signal set, or the third information is configuration information of the second reference signal set. The third information may be from the first device, or may be from the network device when the first device is the terminal device, or the third information may be preconfigured or predefined.

According to a second aspect, this application provides a channel measurement method. The method may be applied to a radio channel measurement scenario, to reduce calculation complexity in a channel measurement process.

Specifically, the method may be implemented by a first device or a component in the first device. The component in this application is, for example, at least one of a processor, a transceiver, a processing module, or a transceiver module. The first device may be a network device, or the first device may be a terminal device configured to send a reference signal. For example, the method is performed by the first device. The method includes: The first device sends a first reference signal set and a second reference signal set, where the first reference signal set includes N first reference signals, the second reference signal set includes M second reference signals, and M and N are positive integers greater than or equal to 1. The first device may further receive first channel information and second channel information, where a first dimension of the first channel information is less than a quantity of antennas of the first device, and a first dimension of the second channel information is less than the quantity of antennas of the first device; or the first device may alternatively receive third channel information, where the third channel information is determined based on the first channel information and the third channel information, and a first dimension of the third channel information is less than a quantity of antennas of the first device.

In a possible implementation, the first device may further send first information, where the first information includes a first value, the first value is less than the quantity of transmit antennas of the first device, and the first dimension is less than or equal to the first value.

In a possible implementation, the first value is less than or equal to N.

In a possible implementation, the first device may further receive an updated first value.

In a possible implementation, the first device may further send at least one of a feedback periodicity of the first channel information, a feedback periodicity of the second channel information, and a feedback periodicity of the third channel information.

In a possible implementation, the first device may further send second information, where the second information includes at least one of a value of N, resource information of the first reference signal, and a sending periodicity of the first reference signal.

In a possible implementation, the first device may further send third information, where the third information includes at least one of a value of M, resource information of the second reference signal, and a sending periodicity of the second reference signal.

According to a third aspect, an embodiment of this application provides a channel measurement apparatus. The apparatus has a function of implementing the terminal device in any one of the first aspect or the possible implementations of the first aspect, or a function of the first device in any one of the second aspect or the possible implementations of the second aspect. The apparatus may be specifically a terminal device, a component in the terminal device, a first device, or a component in the first device.

Functions of the foregoing apparatus may be implemented by hardware, or may be implemented by hardware executing corresponding software. The hardware or the software includes one or more modules, units, or means (means) corresponding to the foregoing functions.

In a possible implementation, a structure of the apparatus includes a processing module and a transceiver module. The processing module is configured to support the apparatus in performing a function of the terminal device in any one of the first aspect or the possible implementations of the first aspect, or is configured to support the apparatus in performing a function of the first device in any one of the second aspect or the possible implementations of the second aspect. The transceiver module is configured to support communication between the apparatus and another communication device. For example, when the apparatus is the terminal device, the transceiver module is configured to receive information from the first device or the like. The apparatus may further include a storage module. The storage module is coupled to the processing module, and stores program instructions and data that are necessary for the apparatus. In an example, the processing module may be a processor, the communication module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus is enabled to perform the method according to any one of the first aspect or the possible implementations of the first aspect, or the method in any one of the second aspect or the possible implementations of the second aspect. Optionally, the apparatus further includes a communication interface, and the processor is coupled to the communication interface. When the apparatus is the terminal device or the first device, the communication interface may be a transceiver or an input/output interface. When the apparatus is a chip included in the terminal device or the first device or a chip included in a target EES, the communication interface may be an input/output interface of the chip. Optionally, the transceiver may be a transceiver circuit, and the input/output interface may be an input/output circuit.

According to a fourth aspect, an embodiment of this application provides a communication system. The communication system may include an apparatus configured to implement the method shown in any one or more of the first aspect and the second aspect and the possible implementations of the first aspect and the second aspect. Alternatively, the communication system may include a terminal device and a first device. The terminal device may be configured to implement the method according to any one of the first aspect or the fifth aspect and the possible implementations of the first aspect or the fifth aspect. The first device may be configured to implement the method according to any one of the second aspect and the possible implementations of the second aspect.

According to a fifth aspect, an embodiment of this application provides a computer-readable storage medium. The computer-readable storage medium stores program instructions. When the program instructions are run on a computer, the computer is enabled to perform the method according to any one of the first aspect and the second aspect and the possible implementations of the first aspect and the second aspect in embodiments of this application. For example, the computer-readable storage medium may be any usable medium accessible by a computer. By way of example but not limitation, the computer-readable medium may include a non-transitory computer-readable medium, a random access memory (random access memory, RAM), a read-only memory (read-only memory, ROM), an electrically erasable programmable read-only memory (electrically erasable programmable read-only memory, EEPROM), a CD-ROM or another optical disk storage, a magnetic disk storage medium or another magnetic storage device, or any other medium that can be configured to carry or store desired program code in a form of instructions or a data structure and that can be accessed by the computer.

According to a sixth aspect, an embodiment of this application provides a computer program product, including computer program code or instructions. When the computer program code or the instructions are run on a computer, the method in any one of the first aspect and the second aspect or the possible implementations of the first aspect and the second aspect is performed.

According to a seventh aspect, this application further provides a chip, including a processor. The processor is coupled to a memory, and is configured to read and execute program instructions stored in the memory, so that the chip implements the method according to any one of the first aspect and the second aspect or the possible implementations of the first aspect and the second aspect.

For each aspect of the second aspect to the seventh aspect and technical effects that may be achieved in each aspect, refer to the description of beneficial effects of the method in any one of the first aspect and the second aspect and the possible implementations of the first aspect and the second aspect. Details are not described herein again.

## BRIEF DESCRIPTION OF DRAWINGS

FIG. 1 is a diagram of an architecture of a wireless communication system according to this application;
FIG. 2 is a schematic flowchart of a channel measurement method according to this application;
FIG. 3 is a schematic flowchart of another channel measurement method according to this application;
FIG. 4 is a schematic flowchart of another channel measurement method according to this application;
FIG. 5 is a schematic flowchart of another channel measurement method according to this application;
FIG. 6 is a diagram of a structure of a channel measurement apparatus according to this application; and
FIG. 7 is a diagram of a structure of another channel measurement apparatus according to this application.

## DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between the associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

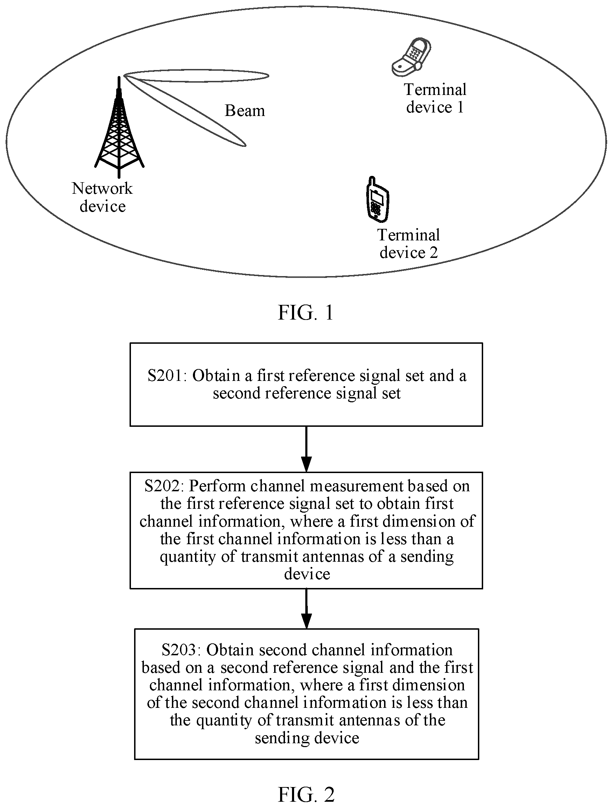

For ease of understanding embodiments of this application, a communication system shown in FIG. 1 is first used as an example to describe a communication system applicable to embodiments of this application. FIG. 1 shows an architecture of a possible communication system applicable to methods provided in embodiments of this application. The architecture of the communication system includes a network device and at least one terminal device. The network device may establish a communication link with the at least one terminal device (for example, a terminal device 1 and a terminal device 2 shown in the figure) through beams in different directions. The network device may provide a wireless access-related service for the at least one terminal device, to implement one or more of the following functions: a wireless physical layer function, resource scheduling and radio resource management, quality of service (quality of service, QoS) management, radio access control, and a mobility management function. The at least one terminal device may also form a beam for data transmission with the network device. In this embodiment, the network device may communicate with the at least one terminal device through the beam.

It should be understood that the network device in embodiments of this application may be any device having a wireless transceiver function or a chip that can be disposed on the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB (home evolved NodeB), or a home NodeB (home NodeB, HNB)), a baseband unit (baseband unit, BBU), an access point (access point, AP), a wireless relay node, a wireless backhaul node, a transmission point (transmission point, TP), a transmission reception point (transmission reception point, TRP/TP), a remote radio head (remote radio head, RRH), or the like in a wireless fidelity (wireless fidelity, Wi-Fi) system, or the device may be, for example, a base station (gNB) or a transmission point in a 5G system, for example, an NR system, one or a group of antenna panels (including a plurality of antenna panels) of a base station in a 5G system, or a network node that forms a gNB or a transmission point, for example, a baseband unit or a distributed unit (distributed unit, DU). Alternatively, the network device may be a radio controller in a cloud radio access network (cloud radio access network, CRAN) scenario, or the network device may be a relay station, an access point, a vehicle-mounted device, a wearable device, an access network device (for example, a gNB) in a future 5G network, an access network device in a future evolved PLMN network, or the like. This is not limited in embodiments of this application.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling, for example, RRC layer signaling may also be considered as being sent by the DU or sent by the DU and the AAU. It may be understood that the network device may be a device including one or more of a CU node, a DU node, and an AAU node. In addition, the CU may be classified into a network device in a radio access network (radio access network, RAN), or the CU may be classified into a network device in a core network (core network, CN). This is not limited in this application.

For example, the network device may be used as a scheduling device. In this case, the network device may include, for example, but is not limited to: an LTE base station eNB, an NR base station gNB, an operator, and the like. Functions of the network device may include, for example: configuring uplink and downlink resources, and sending downlink control information (downlink control information, DCI) in a base station scheduling mode. In this application, for example, the network device may alternatively be used as a first device. In this case, the network device may include, for example, but is not limited to, a TRP and an RRH, and functions of the network device may include, for example, sending a downlink signal and receiving an uplink signal. The first device in this application is a device that sends a reference signal for channel measurement. Therefore, the first device may also be referred to as a sending device. For example, the first device may have an antenna panel. It should be understood that the first device may be further configured to receive a signal, information, signaling, a message, or the like, and is not limited to sending only. Optionally, the first device may include the network device, for example, a base station. In addition, in a scenario in which a terminal device sends a reference signal and another terminal device receives the reference signal, the first device may also include the terminal device that sends the reference signal.

The terminal device in embodiments of this application may also be referred to as user equipment (user equipment, UE), an access terminal, a user unit, a user station, a mobile station, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network or a terminal device in a future evolved public land mobile network (public land mobile network, PLMN). This is not limited in embodiments of this application. The terminal device in embodiments of this application may be a mobile phone (mobile phone), a pad (Pad), a computer having a wireless transceiver function, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the terminal device and a chip that may be disposed in the terminal device are collectively referred to as a terminal device.

Functions of the terminal device may include, for example, but are not limited to: receiving a downlink signal/a sidelink signal, and/or sending an uplink signal/a sidelink signal.

For example, the network device and the terminal device may include an RRC signaling exchange module, a MAC signaling exchange module, and a PHY signaling exchange module. The RRC signaling exchange module may be a module that is used by the network device and the terminal device to send and receive RRC signaling. The MAC signaling exchange module may be a module used by the network device and the terminal device to send and receive a MAC control element (control element, CE). PHY signaling and data may be a module used by the network device and the terminal device to send and receive uplink control signaling or downlink control signaling, uplink and downlink data, or downlink data.

A wireless communication system mentioned in embodiments of this application includes but is not limited to: a global system of mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a long term evolution-advanced (LTE-advanced, LTE-A) system, an LTE frequency division duplex (frequency division duplex, FDD) system, an LTE time division duplex (time division duplex, TDD) system, a universal mobile telecommunications system (universal mobile telecommunications system, UMTS), a worldwide interconnection for microwave access (worldwide interoperability for microwave access, WiMAX) communication system, a 5G communication system, a converged system or an evolved system of a plurality of access systems, three application scenarios of a 5G mobile communication system: enhanced mobile broadband (enhanced mobile broadband, eMBB), ultra-reliable low-latency communication (ultra-reliable low-latency communication, URLLC), and enhanced machine type communication (enhanced machine type communication, eMTC), or a new communication system emerging in the future.

It should be noted that the architecture of the communication system shown in FIG. 1 is not limited to including only the devices shown in the figure, and may further include another device not shown in the figure. Details are not described herein in this application one by one.

The following first provides definitions of technical terms that may occur in embodiments of this application.

(1) Reference signal resource: In embodiments of this application, a resource used by a network device to send a reference signal may be referred to as a reference signal resource. The reference signal may be any one of the following signals: a synchronization signal, a broadcast channel, a synchronization signal/physical broadcast channel block (synchronization signal/physical broadcast channel block, SS/PBCH block), a CSI-RS, a cell-specific reference signal (cell-specific reference signal, CS-RS), a user equipment-specific reference signal (user equipment-specific reference signal, US-RS), a downlink control channel demodulation reference signal, a downlink data channel demodulation reference signal, a downlink phase noise tracking signal, an SRS, or the like. The SS/PBCH block may be referred to as a synchronization signal block (synchronization signal block, SSB) for short.

During transmission, a communication system usually uses different types of reference signals. A type of reference signal is for estimating a channel, so that coherent demodulation can be performed on a received signal that includes control information or data. It may be understood that channel estimation or estimating a channel in this application means channel measurement. Another type is for channel state (or channel quality) measurement, to implement scheduling of a UE. For example, in a downlink channel measurement process, the UE may obtain channel state information (channel state information, CSI) based on channel quality measurement of a CSI-RS sent by a base station. The CSI includes at least one of a rank indicator (rank indicator, RI), a precoding matrix indicator (precoding matrix indicator, PMI), a channel quality indicator (channel quality indicator, CQI), and the like. The CSI information may be sent by the UE to the base station through a physical uplink control channel (physical uplink control channel, PUCCH) or a physical uplink shared channel (physical uplink share channel, PUSCH). The PMI may indicate a precoding matrix. For example, the terminal device may obtain the precoding matrix through the channel estimation, select a matrix closest to the precoding matrix from a predefined codebook set, and feed back the precoding matrix to the base station based on the corresponding PMI. The PMI includes various parameters that can be for reconstructing the precoding matrix, and the base station may reconstruct the precoding matrix based on these parameters.

For another example, in an uplink channel measurement process, the base station estimates an uplink channel by receiving an SRS sent by the UE, and may perform, based on the information, frequency selection resource scheduling, power control, timing estimation, modulation/coding scheme order selection, downlink precoding generation in time division duplex (time division duplex, TDD), and the like.

(2) Beam (beam): A beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent through different beams.

Optionally, a plurality of beams having same or similar communication features may be considered as one beam. One beam corresponds to one or more antenna ports, and is for transmitting a data channel, a control channel, a sounding signal, and the like. The one or more antenna ports corresponding to the beam may also be considered as one antenna port set.

A beam for sending a signal may be referred to as a transmission beam (transmission beam, Tx beam), or may be referred to as a spatial domain transmission filter (spatial domain transmission filter) or a spatial transmission parameter (spatial transmission parameter). A beam for receiving a signal may be referred to as a reception beam (reception beam, Rx beam), or may be referred to as a spatial domain receive filter (spatial domain receive filter) or a spatial receive parameter (spatial RX parameter).

The transmission beam may refer to distribution of signal strength formed in different directions in space after the signal is transmitted through an antenna. The reception beam may refer to distribution of signal strength, in different directions in space, of a radio signal received from an antenna.

Beams may be classified into a transmission beam and a reception beam of a network device, and a transmission beam and a reception beam of a terminal device. The transmission beam of the network device is used to describe transmit-side beamforming information of the network device, and the reception beam of the network device is used to describe receive-side beamforming information of the network device. The transmission beam of the terminal device is used to describe transmit-side beamforming information of the terminal device, and the reception beam of the terminal device is used to describe receive-side beamforming information of the terminal device. That is, the beam may be used to describe beamforming information.

The beam usually corresponds to a resource, and the beam may correspond to a time resource, a space resource, and a frequency domain resource.

Optionally, the beam may further correspond to a reference signal resource (for example, a beamforming reference signal resource) or beamforming information.

Optionally, the beam may alternatively correspond to information associated with a reference signal resource of the network device. A reference signal may be, for example, a CSI-RS, an SSB, a DMRS, a phase tracking reference signal (phase tracking reference signal, PTRS), or a tracking reference signal (tracking reference signal, TRS). The information associated with the reference signal resource may be a reference signal resource index (or an identifier), QCL information (for example, QCL of a type D), or the like. The reference signal resource index corresponds to a transmission/reception beam pair previously established during measurement based on the reference signal resource. The terminal device may deduce beam information based on the reference signal resource index.

(3) Antenna port (antenna port): An antenna port may also be referred to as a port for short, and includes a virtual transmit antenna identified by a receive end device, or a physical transmit antenna that can be distinguished in space. One antenna port may be configured for each virtual transmit antenna, in other words, one virtual transmit antenna may correspond to one antenna port. Each virtual transmit antenna may be a weighted combination of a plurality of physical transmit antennas, or may be one physical transmit antenna. Therefore, one virtual transmit antenna may correspond to one or more physical transmit antennas. Each antenna port may correspond to one reference signal port.

Based on the foregoing description, the following describes embodiments of this application. A technical problem to be resolved in this application is first described, and then embodiments of this application are described with reference to a possible implementation procedure of embodiments of this application.

In current downlink channel estimation, for example, downlink channel estimation in an FDD system, a base station sends a CSI-RS, and a UE performs downlink channel estimation by using the CSI-RS, calculates precoding matrix information based on an estimation result, and then feeds back the precoding matrix information to the base station. Therefore, in a downlink channel estimation process, a terminal device may be used as a receive end device, and the base station may be used as a transmit end device.

For example, in an existing 5G standard, a specific process in which the UE calculates precoding is as follows:

It is assumed that the channel estimation matrix obtained by an $l^{th}$ UE on a $k^{th}$ subband in the frequency domain is represented as $\hat{H}_l(t,k) \in \mathbb{C}^{N_{RX} \times N_{TX}}$, and singular value decomposition (singular value decomposition, SVD) is performed on $\hat{H}_l(t,k)$ with dimensions of $N_{RX} \times N_{TX}$, and $\hat{H}_l(t,k) = U_{l,k} \Sigma_{l,k} V_{l,k}^{\mathsf{H}}$ may be obtained, where $N_{RX}$ is a quantity of rows, $N_{TX}$ is a quantity of columns, $U_{l,k} \in \mathbb{C}^{N_{RX} \times N_{RX}}$ is a left singular vector, $V_{l,k} \in \mathbb{C}^{N_{TX} \times N_{TX}}$ is a right singular vector, and $\Sigma_{l,k} \in \mathbb{C}^{N_{RX} \times N_{TX}}$ is a singular value matrix.

First $NLayer_{l,k}$ columns of $V_{l,k}$ are extracted as a matrix $P_{l,k,op1} = V_{l,k}[:,1:NLayer_{l,k}] \in \mathbb{C}^{Ntx \times NLayer_{l,k}}$, and $P_{l,k,op1}$ of a plurality of users forms $P_{k,op1} = [P_{1,k,op1}, \ldots, P_{l,k,op1}, \ldots, P_{Nue,k,op1}]$ in combination, where $Nue$ represents a total quantity of the users.

Then, a precoding matrix $\widetilde{W}_{k,op1}^{zf}$ is calculated based on a zero forcing (zero forcing) algorithm, and normalization processing is performed on the precoding matrix $\widetilde{W}_{k,op1}^{zf}$, to obtain a final precoding matrix $W_{k,op1}^{zf}$:

$$W_{k,op1}^{zf} = \frac{\widetilde{W}_{k,op1}^{zf}}{\sqrt{\sum_{i=1}^{Ntrunc}\left|\widetilde{W}_{k,op1}^{zf}[i,:]\right|^2}} \in \mathbb{C}^{N_{TX} \times NLayer_k}$$

$\widetilde{W}_{k,op1}^{zf}$ satisfies:

$$\widetilde{W}_{k,op1}^{zf} = P_{k,op1} \cdot \left(P_{k,op1}^H \cdot P_{k,op1}\right)^{-1} \in \mathbb{C}^{N_{TX} \times NLayer_{l,k}}$$

It can be learned that, the SVD decomposition needs to be performed on $\hat{H}_l(t, k)$ with dimensions of $N_{RX} \times N_{TX}$ on a UE side. When there are a large quantity of transmit antennas on a base station side, a calculation amount required for the SVD decomposition is very large. This increases a processing delay and further reduces a system throughput.

In conclusion, processing complexity in the current downlink channel estimation process is excessively large. This increases a system delay and reduces the system throughput. To reduce complexity of a channel estimation process, an embodiment of this application provides a channel measurement method. The method may be implemented by a terminal device (for example, a UE) or a component in the terminal device. The component is, for example, at least one of a processor, a transceiver, a processing module, or a transceiver module.

As shown in FIG. 2, an example in which the method is performed by the terminal device is used. The method includes steps shown in S201 to S203. Details are as follows:

S201: The terminal device obtains a first reference signal set and a second reference signal set.

The first reference signal set includes N (or denoted as *Nbeam*) first reference signals, and the second reference signal set includes M second reference signals. M and N are positive integers greater than or equal to 1. For example, N is greater than 1, and M is equal to 1.

It should be understood that, in S201, that the terminal device obtains a first reference signal set includes: The terminal device receives the N first reference signals in the first reference signal set. Similarly, that the terminal device obtains the second reference signal set means that the terminal device receives the M second reference signals in the second reference signal set. The first reference signal and the second reference signal are sent by a same first device (for example, sent by a same base station or a same TRP). In other words, devices that send the first reference signal set and the second reference signal set are both the first device. In the following, an example in which the first device is a network device is used for description. It may be understood that, according to a requirement of an actual application scenario, the network device may be replaced with another apparatus, device, or the like that supports wireless signal receiving and sending.

In this application, a reference signal set is a general term of included reference signals of one or more ports. In other words, the N first reference signals in the first reference signal set may include reference signals of one or more ports, and the M second reference signals in the second reference signal set may include reference signals of one or more ports. The port of the N first reference signals may be the same as or different from the port of the M second reference signals.

Optionally, the N first reference signals in the first reference signal set correspond to N different beams. Similarly, optionally, the M second reference signals in the second reference signal set correspond to M different beams.

The following separately describes the first reference signal set and the second reference signal set.

(1) In the first reference signal set, a quantity of the first reference signals is N, where N does not exceed a quantity $N_{TX}$ of transmit antennas of the network device, and/or N is not less than a multi-path quantity $N_{path}$ of each channel. It may be assumed that multi-path quantities of a plurality of channels of the network device are all $N_{path}$. $N_{TX}$ and $N_{path}$ are positive integers greater than or equal to 1. It should be understood that a quantity of transmit antennas of the network device in this application may be a quantity of physical transmit antennas, or may be a quantity of virtual transmit antennas (or logical transmit antennas). As described in this application, one virtual transmit antenna corresponds to one or more physical transmit antennas, and one virtual transmit antenna corresponds to one antenna port. Therefore, the quantity of transmit antennas also represents a quantity of antenna ports.

In addition, optionally, N corresponds to the terminal device. In other words, quantities of first reference signals in first reference signal sets corresponding to different terminal devices may be different. Therefore, N may also be referred to as a terminal device level *Nbeam*. Further, optionally, for a same network device, a quantity of first reference signals in a first reference signal set does not exceed N' (also referred to as a base station-level *Nbeam*), in other words, N is less than or equal to N'.

In a possible example, the first reference signal may include one or more reference signals of a CSI-RS, an SSB, a DMRS, a PTRS, or a TRS.

(2) In the second reference signal set, the second reference signal may be used by the terminal device to perform downlink channel estimation. For example, the second reference signal may include a CSI-RS.

Optionally, a time domain resource of the second reference signal in the second reference signal set is located after a time domain resource of the first reference signal. For example, time domain resources of all second reference signals are located after the time domain resource of the first reference signal.

Optionally, before S201, the terminal device may further obtain at least one of first information, second information, and third information.

The first information includes a first value, and the first value is less than the quantity of transmit antennas of the first device, to reduce a data amount and reduce technical complexity. For example, the first value is less than or equal to N, so that the data amount can be further reduced, and calculation complexity can be reduced. It may be understood that the first value is a maximum value of a first dimension. The first dimension is one of a plurality of dimensions of channel information determined by the terminal device. For example, if the channel information is a matrix, the plurality of dimensions include a quantity of rows and a quantity of columns of the matrix, and the first dimension may be the quantity of rows and/or the quantity of columns of the matrix.

It may be understood that the first value may be set for the terminal device. Optionally, the first value does not exceed the quantity N of the first reference signals in the first reference signal set, and/or the first value is not less than the multi-path quantity $N_{path}$ of each channel. It should be further understood that the terminal device may determine estimation precision of a slowly varied channel matrix (for example, $Q_1^1$ or $C_l$ in this application) based on a decoding result of downlink data. When the precision of the slowly varied channel matrix is insufficient, the terminal device may update the first value by increasing or decreasing the first value, and send an updated first value to the network device, so that the network device determines a precoding matrix based on the updated first value, to improve channel measurement precision.

For example, the terminal device increases or decreases the first value by a step value (for example, 1 or 2), determines whether estimation precision, of a slowly varied channel matrix, determined based on an increased first value or a decreased first value meets a precision requirement. If the estimation precision meets the precision requirement, the current increased or decreased first value is used as the updated first value. If the estimation precision, of the slowly varied channel matrix, determined based on the increased or decreased first value is still insufficient, the first value is increased or decreased again by the step value, and it is determined again whether estimation precision, of a slowly varied channel matrix, determined based on a current increased or decreased first value meets the precision requirement, to determine whether the first value needs to be further increased or decreased. A determining manner and a processing manner after the determining are not described again.

If the estimation precision, of the slowly varied channel matrix, determined by the terminal device based on the current increased first value is lower than estimation precision, of a slowly varied channel matrix, determined based on the unincreased first value, the terminal device may decrease the unincreased first value by the step value, and determine whether estimation precision, of a slowly varied channel matrix, determined based on a decreased first value meets the precision requirement. Similarly, if the estimation precision, of the slowly varied channel matrix, determined by the terminal device based on the current decreased first value is lower than estimation precision, of a slowly varied channel matrix, determined based on the undecreased first value, the terminal device may increase the undecreased first value by the step value, and determine whether estimation precision, of a slowly varied channel matrix, determined based on an increased first value meets the precision requirement.

The second information includes at least one of a value of N, resource information of the first reference signal, and a sending periodicity of the first reference signal. The second information may be for configuring the first reference signal set. Therefore, the terminal device may receive the first reference signal in the first reference signal set based on the second information. Optionally, if the N first reference signals in the first reference signal set are periodically sent, the second information may include a sending periodicity P.

The third information includes at least one of a value of M, resource information of the second reference signal, and a sending periodicity of the second reference signal. The third information may be for configuring the second reference signal set. Therefore, the terminal device may receive the second reference signal in the second reference signal set based on the third information.

In another example, the terminal device may obtain at least one of the first information, the second information, and the third information by receiving a DCI indication, RRC signaling configuration, or the like. Alternatively, the terminal device may obtain at least one of the first information, the second information, and the third information in a predefinition or preconfiguration manner.

S202: The terminal device performs channel measurement based on the first reference signal set (or the first reference signal) to obtain first channel information, where a first dimension of the first channel information is less than the quantity of transmit antennas of the first device.

Optionally, the first dimension of the first channel information is less than or equal to the first value, and the first value is less than the quantity of transmit antennas of the first device. As described in S201, the first value may be included in the first information. The first information may be from the network device. Therefore, the network device may configure the first dimension of the first channel information, to perform dimension reduction. Further, optionally, a value of the first dimension is the first value. Therefore, it can be ensured that the network device and the terminal device learn of a specific value of the first dimension, to avoid a deviation, in determining the precoding matrix, caused by inconsistent understanding of the value of the first dimension by the network device and the terminal device, so that accuracy of the precoding matrix can be improved.

In this application, the first value may be represented as $N_{trunc}$. In other words, the network device may indicate $N_{trunc}$ to the terminal device.

In a possible example, after obtaining the first reference signal set, the terminal device may perform channel estimation based on the N first reference signals in the first reference signal set to obtain a channel matrix, and obtain the channel slowly varied matrix based on the channel matrix. In this application, the channel slowly varied matrix is information that is obtained by the terminal device by performing channel measurement based on the N first reference signals and that is irrelevant to time domain and/or frequency domain. The terminal device may further decompose the channel slowly varied matrix, and truncate a decomposition result based on the first value, to obtain the first channel information.

For example, the first reference signal set includes *Nbeam* first reference signals. After receiving a reference signal at a $t^{th}$ moment in time domain and on a $k^{th}$ subband in frequency domain, an $l^{th}$ terminal device estimates a channel matrix $\widehat{H}_l(t,k) \in \mathbb{C}^{N_{RX} \times N_{TX}}$, where $t$ represents a time-varying characteristic of a channel, $\hat{H}_l(t, k)$ is a channel matrix at the $t^{th}$ moment, and $k$ represents frequency selectivity of the channel. $l$, $t$, and $k$ are positive integers. $N_{RX}$ represents a quantity of receive antennas of the terminal device, and $N_{TX}$ represents a quantity of transmit antennas or a quantity of transmit ports of the network device.

Further, the terminal device performs cancellation by using *Nbeam* channel estimation results to obtain a matrix $C_l \in \mathbb{C}^{Nbeam \times N_{TX}}$ independent of $t$ in time domain and $k$ in frequency domain, in other words, a channel estimation matrix corresponding to each first reference signal may be represented as $\hat{H}_l(t, k) = A_l(t, k) \cdot C_l$, where $\widehat{H}_l(t,k) \in \mathbb{C}^{Nbeam \times N_{TX}}$, $A_l(t, k)$ represents a part that has a time-varying characteristic and frequency selectivity in the channel estimation matrix, and $C_l$ is the matrix independent of $t$ in time domain and $k$ in frequency domain.

The terminal device may further perform decomposition and dimension reduction on $C_l$. For example, the terminal device decomposes the matrix $C_l$ to obtain a matrix $Q_l \in \mathbb{C}^{N_{TX} \times N_{TX}}$, where $Q_l$ may be obtained by performing QR decomposition on $C_l = E_l R_l^H Q_l^H$ or by performing SVD decomposition on $C_l = U_l \Sigma_l Q_l^H$. The terminal device further truncates $Q_l \in \mathbb{C}^{N_{TX} \times N_{TX}}$, and uses first $N_{trunc}$ columns of $Q_l$ as $Q_l^1$, that is, the matrix

$$Q_l^1 = Q_l(:,1:N_{trunc}) \in \mathbb{C}^{N_{TX} \times N_{trunc}}.$$

In this example, $Q_l^1$ is the first channel information. The first dimension of the first channel information is a quantity of columns of $Q_l^1$, and that the first dimension of the first channel information is less than the quantity of transmit antennas or the quantity of transmit ports of the first device is: The quantity of columns of $Q_l^1$ is Ntrunc, where Ntrunc < $N_{TX}$. In other words, the first dimension of the first channel information in this example is the first value. In an actual application, the first dimension of the first channel information may alternatively be less than the first value. For example, the following is determined with reference to the foregoing example: $Q_l^1 = Q_l(:,1:N'_{trunc}) \in \mathbb{C}^{N_{TX} \times (N'_{trunc})}$, where $N'_{trunc} < N_{trunc}$.

Optionally, an execution time sequence of S202 may be after the terminal device obtains the first reference signal set and the second reference signal set. In this case, time at which the terminal device obtains the first reference signal set may be before or after the terminal device obtains the second reference signal set, and no specific requirement is imposed. Alternatively, an execution time sequence of S202 may be after the terminal device obtains the first reference signal set and before the terminal device obtains the second reference signal set.

S203: The terminal device obtains second channel information based on the second reference signal set (or the second reference signal) and the first channel information, where a first dimension of the second channel information is less than the quantity of transmit antennas or the quantity of transmit ports of the first device.

Optionally, in S203, the terminal device may determine a channel estimation result based on the second reference signal set, and determine the second channel information based on the channel estimation result and the first channel information.

The example in S202 is still used, and the first channel information is represented as $Q_l^1$. In S203, the terminal device may determine the channel estimation result $\overline{H}_l(t,k) \in \mathbb{C}^{N_{RX} \times N_{TX}}$ based on the second reference signal. The terminal device may further perform dimension reduction on $\overline{H}_l(t,k)$ based on $Q_l^1$, to obtain $H_l^1(t,k) = \overline{H}_l(t,k) \cdot Q_l^1 \in \mathbb{C}^{N_{TX} \times Ntrunc}$.

The terminal device may further perform SVD decomposition on $H_l^1(t,k)$, that is, make $H_l^1(t,k) = Z_{l,k} \Lambda_{l,k} V_{l,k}^H$ to obtain $V_{l,k}$, where $V_{l,k} \in \mathbb{C}^{Ntrunc \times Ntrunc}$.

In this example, $V_{l,k}$ is the second channel information, and a first dimension of the second channel information is a quantity of columns of $V_{l,k}$. It may be understood that, that the first dimension of the second channel information is less than the quantity of transmit antennas of the first device is that the quantity of columns of $V_{l,k}$ is Ntrunc, where Ntrunc < $N_{TX}$.

It may be understood that the first device in S203 is the same as the first device in S202, in other words, devices that send the first reference signal set and the second reference signal set are both the first device.

Based on the procedure shown in FIG. 2, the terminal device may obtain the first channel information and the second channel information. Both the first dimension of the first channel information and the first dimension of the second channel information are less than the quantity of transmit antennas of the network device. Therefore, complexity in a channel estimation process can be reduced.

In addition, based on the procedure shown in FIG. 2, the terminal device may further send at least one of the first channel information, the second channel information, and third channel information. The third channel information is determined based on the first channel information and the second channel information, and a first dimension of the third channel information is less than the quantity of transmit antennas of the network device. For example, the terminal device sends at least one of the first channel information, the second channel information, and the third channel information to the network device. Correspondingly, the network device may receive at least one of the first channel information, the second channel information, and the third channel information. At least one of the first channel information, the second channel information, and the third channel information may be received by the first device, for example, the network device. For example, the first device is the network device. The network device may reconstruct a precoding matrix based on at least one of the first channel information, the second channel information, and the third channel information.

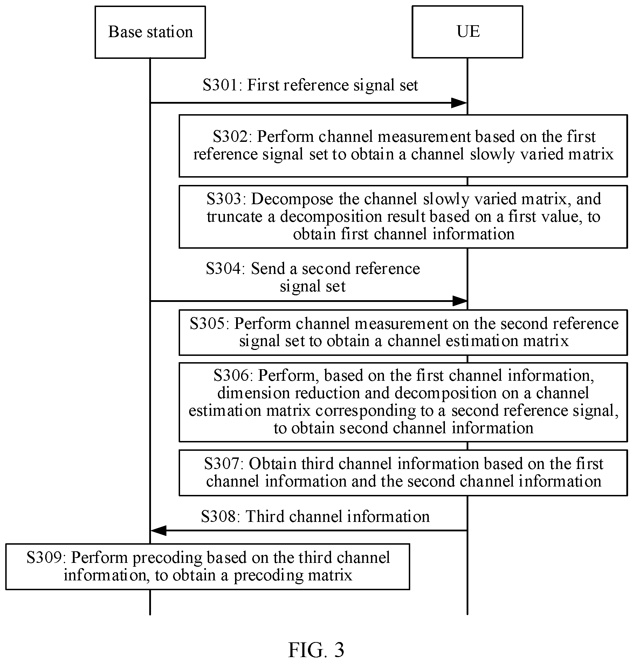

At least one of the first channel information, the second channel information, and the third channel information may be indicated by a PMI. In other words, the PMI includes at least one of the first channel information, the second channel information, and the third channel information. As described in this application, the PMI includes a parameter that can be for reconstructing the precoding matrix, and the terminal device may send the PMI, where the PMI includes at least one of the first channel information, the second channel information, and the third channel information, so that the first device can reconstruct the precoding matrix based on the PMI. For a manner of reconstructing the precoding matrix by the first device, refer to descriptions in examples such as FIG. 3 to FIG. 5.

The example in S202 is still used. The first channel information is represented as $Q_l^1$, and the second channel information is represented as $V_{l,k}$. In this case, the terminal device may further send at least one of $Q_l^1$, $V_{l,k}$, and $\hat{V}_{l,k}$.

$$\hat{V}_{l,k} = Q_l^1 \cdot V_{l,k} \in \mathbb{C}^{N_{TX} \times Ntrunc}$$

. $\hat{V}_{l,k}$ may be understood as obtained by projecting $V_{l,k}$ to high-dimensional space related to the quantity of transmit antennas of the network device, where the projection space is the processing result $Q_l^1$ of the channel slowly varied matrix $C_l$.

It may be understood that the terminal device may further obtain a feedback periodicity, and periodically send a channel measurement result based on the feedback periodicity. The channel measurement result may include at least one of the first channel information, the second channel information, and the third channel information.

For example, the terminal device may receive fourth information from the network device, and the fourth information may include at least one of a feedback periodicity of the first channel information, a feedback periodicity of the second channel information, and a feedback periodicity of the third channel information. The terminal device may send the first channel information based on the feedback periodicity of the first channel information. The terminal device may further send the second channel information based on the feedback periodicity of the second channel information. The terminal device may further send the third channel information based on the feedback periodicity of the third channel information. For example, the feedback periodicity obtained by the terminal device includes three values, where the three values are the feedback periodicity of the first channel information, the feedback periodicity of the second channel information, and the feedback periodicity of the third channel information respectively, and the three values may be the same or different. Optionally, the feedback periodicity of the first channel information, the feedback periodicity of the second channel information, and the feedback periodicity of the third channel information may be carried in different information elements (information elements, IEs), or may be carried in a same IE. No specific requirement is imposed.

Alternatively, the fourth information includes the feedback periodicity, and the terminal device may send any one of the first channel information, the second channel information, and the third channel information based on the feedback periodicity. In other words, the feedback periodicity may be used as the feedback periodicity of the first channel information, the feedback periodicity of the second channel information, or the feedback periodicity of the third channel information. For example, the fourth information is a value, and the value may be used as the feedback periodicity.

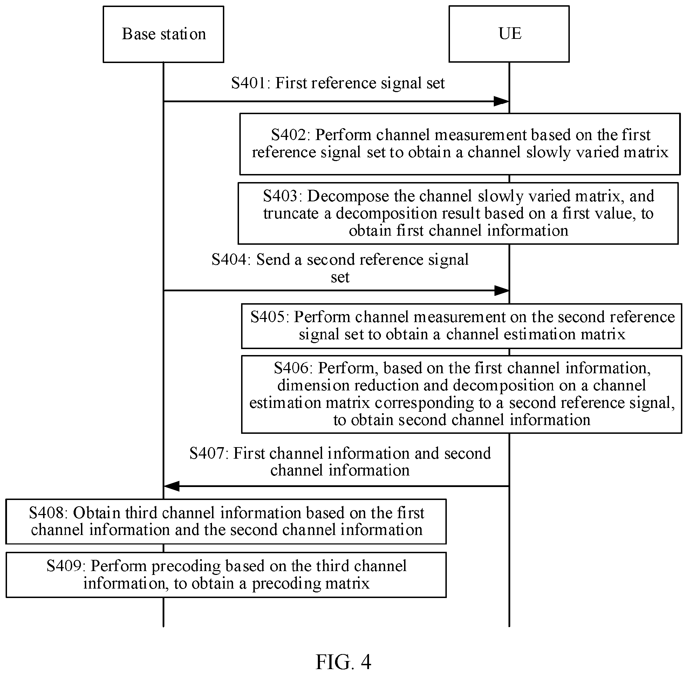

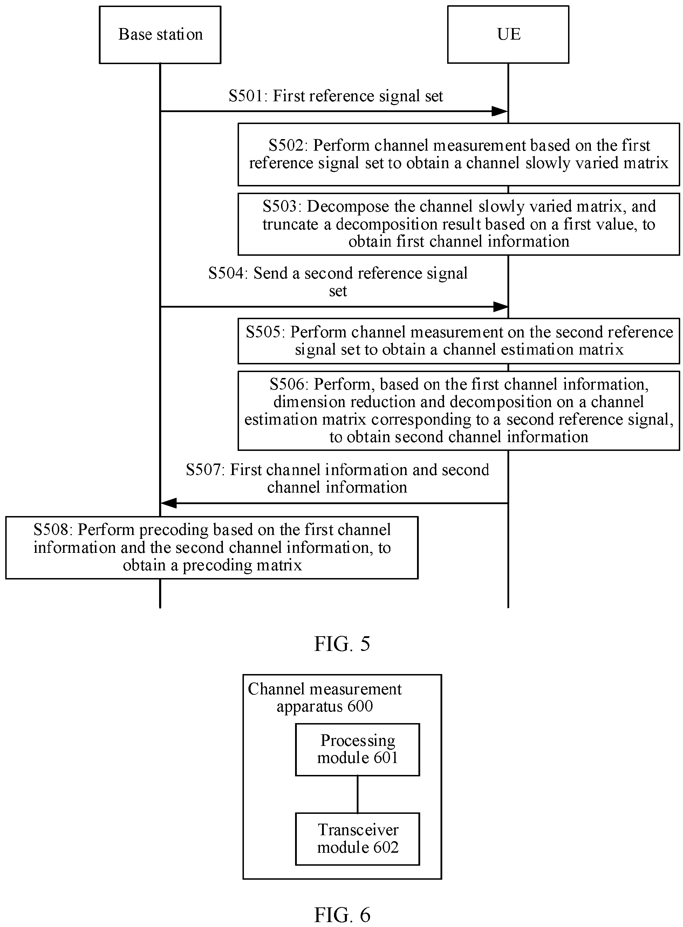

With reference to FIG. 3 to FIG. 5, the following describes procedures of channel estimation methods provided in embodiments of this application. In the procedure shown in FIG. 3, a terminal device sends third channel information to a network device. In the procedures shown in FIG. 4 and FIG. 5, a terminal device sends first channel information and second channel information to a network device, and a difference lies in that the network device processes the first channel information and the second channel information in different manners in FIG. 4 and FIG. 5. Details in the procedures are described with reference to FIG. 4 and FIG. 5 below, and are not described herein. It should be understood that, in the procedures shown in FIG. 3 to FIG. 5, for concepts, determining manners, and meanings of terms and parameters such as a first reference signal set, a second reference signal set, the first channel information, the second channel information, third channel information, and a first value, refer to the foregoing description of the procedure shown in FIG. 2. Details are not described again.

It may be understood that, in the procedures shown in FIG. 3 to FIG. 5, an example in which a quantity of first reference signals in the first reference signal set is *Nbeam,* a first dimension is a first value $N_{trunc}$, and execution bodies are a base station and a UE is used for description, where $N_{trunc} < N_{TX}$, to reduce calculation complexity in a channel estimation process.

As shown in FIG. 3, a channel estimation method provided in an embodiment of this application may include the following steps.

S301: A base station sends a first reference signal set.

Correspondingly, a UE receives the first reference signal set.

The first reference signal set includes *Nbeam* first reference signals.

Optionally, each first reference signal may correspond to one beam of the base station.

In addition, optionally, the base station may determine base station-level *Nbeam,* where a quantity of ranges of the base station-level *Nbeam* does not exceed a quantity $N_{TX}$ of transmit antennas of the base station, and is not less than a multi-path quantity $N_{path}$ of a base station channel. The base station may further determine, based on the base station-level *Nbeam,* user-level *Nbeam* used by each UE, where a value of the user-level *Nbeam* does not exceed a value of the base station-level *Nbeam.*

Before S301, the base station may indicate *Nbeam* (the user-level *Nbeam* of the UE) to the UE based on second information, or the UE may obtain *Nbeam* in a preconfiguration or predefinition manner. For example, the second information may be included in DCI, an RRC message, or another message. The second information may be configuration information of the first reference signal set. For example, in addition to indicating a value of *Nbeam,* the second information may further indicate at least one of resource information of the first reference signal and a sending periodicity of the first reference signal.

As shown in FIG. 3, if the first reference signal is periodically sent, in S301, the base station may periodically send the first reference signal, and correspondingly, the UE may periodically receive the first reference signal.

Optionally, the first reference signal set may be configured by the base station for the UE based on the second information, or the second information is preconfigured or predefined. The second information may be included in the DCI, the RRC message, or the another message. The second information may also be referred to as the configuration information of the first reference signal set.

S302: The UE performs channel measurement based on the first reference signal set to obtain a channel slowly varied matrix. The channel slowly varied matrix is represented as $C_l$.

A channel estimation matrix corresponding to each first reference signal may be represented as $\hat{H}_l(t,k) = A_l(t,k) \cdot C_l$, where $\hat{H}_l(t,k) \in \mathbb{C}^{Nbeam \times N_{TX}}$, $A_l(t,k)$ represents a part that has a time-varying characteristic and frequency selectivity in the channel estimation matrix, $C_l$ is a matrix unrelated to $t$ in time domain and $k$ in frequency domain, namely, the channel slowly varied matrix, and $C_l \in \mathbb{C}^{Nbeam \times N_{TX}}$.

It can be learned that a quantity of columns (namely, a first dimension) of $C_l$ is $N_{TX}$.

S303: The UE decomposes the channel slowly varied matrix, and truncates a decomposition result based on a first value, to obtain first channel information. The first value may be represented as $N_{trunc}$, and the first channel information may be represented as $Q_l^1$.

As described in S202, the UE may perform QR decomposition or SVD decomposition on $C_l$ to obtain $Q_l$, and then truncate $Q_l$ based on the first value $N_{trunc}$ to obtain $Q_l^1$.

For example, $Q_l^1 = Q_l(:,1:N_{trunc}) \in \mathbb{C}^{N_{TX} \times N_{trunc}}$. It can be learned that a quantity of columns (namely, a first dimension) of $Q_l^1$ is $N_{trunc}$ through truncation, and is less than the quantity $N_{TX}$ of columns of $\hat{H}_l(t,k)$.

Optionally, the first value may be configured by the base station for the UE based on the first information, or the first value may be preconfigured. The first information may be included in DCI, an RRC message, or another message.

In addition, as described in S202, the UE may also update the first value, and notify the base station of an updated first value (for example, denoted as $N_{trunc}'$, where $N_{trunc}'$ may be determined based on $N_{trunc}$). In this case, $N_{trunc}$ in the formula may be replaced with the updated $N_{trunc}'$.

S304: The base station sends a second reference signal set to the UE.

The second reference signal set may include M second reference signals, and the second reference signal is, for example, a CSI-RS. M is a positive integer. For ease of description, M=1 is used as an example below.

Optionally, before S304, the base station may configure the second reference signal set for the UE based on third information, or the third information may be preconfigured or predefined. For example, the third information may be included in DCI, an RRC message, or another message. The third information may be configuration information of the second reference signal set. For example, in addition to indicating a value of M, the third information may further indicate at least one of resource information of the second reference signal and a sending periodicity of the second reference signal.

S305: The UE performs channel measurement on the second reference signal set to obtain a channel estimation matrix, where the channel estimation matrix is represented as $\overline{H}_l(t,k)$.

A channel estimation matrix corresponding to each second reference signal is $\overline{H}_l(t,k) \in \mathbb{C}^{N_{RX} \times N_{TX}}$.

It can be learned that a quantity of columns (namely, a first dimension) of the channel estimation matrix corresponding to each second reference signal in the second reference signal set is $N_{TX}$.

Optionally, S304 and/or S305 may alternatively be performed before S302 and/or S303.

S306: The UE performs, based on the first channel information, dimension reduction and decomposition on the channel estimation matrix corresponding to the second reference signal, to obtain second channel information. The second channel information may be represented as $V_{l,k}$.

The UE may perform dimension reduction on $\overline{H}_l(t,k)$ based on $Q_l^1$, to obtain

$$H_l^1(t,k) = \overline{H}_l(t,k) \cdot Q_l^1 \in \mathbb{C}^{NTX \times Ntrunc}$$ . Further, the UE may perform SVD decomposition on $H_l^1(t,k)$,

to obtain $V_{l,k} \in \mathbb{C}^{Ntrunc \times Ntrunc}$ $V_{l,k}$

It can be learned that a quantity of columns (namely, a first dimension) of $V_{l,k}$ is *Ntrunc*.

S307: The UE obtains third channel information based on the first channel information and the second channel information. The third channel information may be represented as $\hat{V}_{l,k}$. $\hat{V}_{l,k} = Q_l^1 \cdot V_{l,k} \in \mathbb{C}^{NTX \times Ntrunc}$ . $\hat{V}_{l,k}$ may be understood as obtained by projecting $V_{l,k}$ to high-dimensional space related to a quantity of transmit antennas of a network device, where the projection space is the processing result $Q_l^1$ of the channel slowly varied matrix $C_l$.

It can be learned that a quantity of columns (namely, a first dimension) of $\hat{V}_{l,k}$ is *Ntrunc*.

S308: The UE sends the third channel information to the base station.

Correspondingly, the base station receives the third channel information $\hat{V}_{l,k}$.

The UE may send the third channel information $\hat{V}_{l,k}$ to the base station based on a feedback periodicity (for example, a feedback periodicity of the third channel information). For a manner of determining the feedback periodicity, refer to the foregoing description of the feedback periodicity. Details are not described herein again.

S309: The base station performs precoding based on the third channel information, to obtain a precoding matrix.

For example, the base station may extract first $Nlayer_{l,k}$ columns of $\hat{V}_{l,k}$, to obtain a matrix $P_{l,k,op1}$, where

$$P_{l,k,op1} = \hat{V}_{l,k}[:,1:NLayer_{l,k}] \in \mathbb{C}^{Ntx \times NLayer_{l,k}}$$ $P_{l,k,op1}$ Optionally, $Nlayer_{l,k} < Ntrunc$.

Further, the base station may combine matrices $P_{l,k,op1}$ of a plurality of UEs into $P_{k,op1}$, where

$$P_{k,op1} = [P_{1,k,op1}, \dots, P_{l,k,op1}, \dots, P_{Nue,k,op1}] \in \mathbb{C}^{Ntx \times NLayer_k}$$ . *Nue* indicates a total quantity of UEs. $P_{l,k,op1}$ of each UE may be determined based on $\hat{V}_{l,k}$ fed back by the UE. For a determining manner of $\hat{V}_{l,k}$ fed back by each UE, refer to S301 to S307.

The base station may further calculate a precoding matrix $\widetilde{W}_{k,op1}^{zf}$ based on a zero forcing (zero forcing) algorithm and based on $P_{k,op1}$.

$$\widetilde{W}_{k,op1}^{zf} = P_{k,op1} \cdot \left(P_{k,op1}^{H} \cdot P_{k,op1}\right)^{-1} \in \mathbb{C}^{Ntx \times NLayer_{l,k}} .$$

The base station may perform normalization processing on the precoding matrix $\widetilde{W}_{k,op1}^{zf}$, to obtain a final precoding matrix $W_{k,op1}^{zf}$:

$$W_{k,op1}^{zf} = \frac{\widetilde{W}_{k,op1}^{zf}}{\sqrt{\sum_{i=1}^{Ntrunc}\left|\widetilde{W}_{k,op1}^{zf}[i,:]\right|^2}} \in \mathbb{C}^{NTX \times NLayer_k} .$$

S309 may also be referred to as a reconstructed precoding matrix.

Based on the precoding matrix obtained in S309, a symbol precoded based on the precoding matrix may be sent between the UE and the base station.

In the procedure shown in FIG. 3, the quantity of columns of the third channel information $\hat{V}_{l,k}$ fed back by the UE to the base station is less than $N_{TX}$. Therefore, SVD decomposition does not need to be performed on the channel estimation matrix with dimensions of $N_{RX} \times N_{TX}$, so that complexity in a channel estimation process can be reduced.

In a precoding calculation process, a main calculation amount is mainly consumed by SVD decomposition. For a matrix A with dimensions of $m \times n$, an order of magnitude of calculation complexity of SVD decomposition on the matrix A is $m^2n$. When the UE performs, based on a requirement in an existing 5G standard, SVD decomposition on $\hat{H}_l(t, k)$ with dimensions of $N_{RX} \times N_{TX}$, an order of magnitude of complexity is $N_{RX}^2N_{TX}$. It is assumed that channel estimation needs to be performed K times in total. In this case, total complexity is $KN_{RX}^2N_{TX}$. By contrast, by using the procedure shown in FIG.

3, calculation complexity of performing SVD decomposition on $C_l \in \mathbb{C}^{Nbeam \times N_{TX}}$ in S303 is $Nbeam^2N_{TX}$, and calculation complexity of performing SVD decomposition on a dimension reduction matrix

$H_l^1(t, k) \in \mathbb{C}^{N_{RX} \times Ntrunc}$ in S306 is $N_{RX}^2Ntrunc$. It is assumed that channel estimation needs to be performed K times in total. In this case, the total complexity is $KN_{RX}^2Ntrunc$. A result of complexity comparison between this solution and SVD decomposition performed on $\hat{H}_l(t, k)$ with dimensions of $N_{RX} \times N_{TX}$ is shown in Table 1.

**Table 1**

| Complexity of performing SVD decomposition on $\hat{H}_l(t, k)$ with dimensions of $N_{RX} \times N_{TX}$ | Complexity of SVD decomposition in this solution |
|---|---|
| $KN_{RX}^2N_{TX}$ | $Nbeam^2 N_{TX}+KN_{RX}^2Ntrunc$ |

$N_{TX} \geq Nbeam \geq Ntrunc \geq N_{RX}$. As a quantity of transmit antennas of the base station increases, a value of K is far greater than $N_{TX}$, and therefore, a calculation amount $Nbeam^2N_{TX}$ consumed by the SVD on the channel slowly varied matrix may be ignored. Because a dimension reduction quantity $Nbeam$ is less than the quantity $N_{TX}$ of transmit antennas, the channel estimation method shown in this application can significantly reduce calculation complexity of precoding.

As shown in FIG. 4, another channel estimation method provided in an embodiment of this application may include the following steps.

For S401 to S406, refer to the descriptions of S301 to S306. Details are not described again.

S407: A UE sends first channel information and second channel information to a base station. The first channel information may be represented as $Q_l^1$, and the second channel information may be represented as $V_{l,k}$.

Correspondingly, the base station receives the first channel information and the second channel information.

The UE may send the first channel information $Q_l^1$ and the second channel information $V_{l,k}$ to the base station based on a feedback periodicity (for example, a feedback periodicity of the first channel information and/or a feedback periodicity of the second channel information). For a manner of determining the feedback periodicity, refer to the foregoing description of the feedback periodicity. Details are not described herein again.

S408: The base station obtains third channel information based on the first channel information and the second channel information. The third channel information may be represented as $\hat{V}_{l,k}$.

For a manner in which the base station obtains the third channel information $\hat{V}_{l,k}$ based on the first channel information $Q_l^1$ and the second channel information $V_{l,k}$ in S408, refer to the description in S307. It may be understood that a difference between S307 and S408 lies only in that the UE or the base station obtains the third channel information $\hat{V}_{l,k}$ based on the first channel information $Q_l^1$ and the second channel information $V_{l,k}$.

For S409, refer to the description of S309. Details are not described again.

It can be learned that a difference between the procedure shown in FIG. 4 and the procedure shown in FIG. 3 lies in that, in the procedure shown in FIG. 3, the UE obtains the third channel information $\hat{V}_{l,k}$ based on the first channel information $Q_l^1$ and the second channel information $V_{l,k}$, and feeds back the third channel information $\hat{V}_{l,k}$ to the base station, and the base station determines a precoding matrix based on the third channel information $\hat{V}_{l,k}$. By contrast, in the procedure in FIG. 4, the UE feeds back the first channel information $Q_l^1$ and the second channel information $V_{l,k}$ to the base station, the base station obtains the third channel information $\hat{V}_{l,k}$ based on the first channel information $Q_l^1$ and the second channel information $V_{l,k}$, and the base station determines the precoding matrix based on the third channel information $\hat{V}_{l,k}$.

It may be understood that, in the procedure shown in FIG. 4, effect of reducing calculation complexity of the UE in a channel estimation process is the same as that in the procedure shown in FIG. 3. Therefore, for the effect, refer to the description of the procedure shown in FIG. 3. Details are not described herein again.

As shown in FIG. 5, another channel estimation method provided in an embodiment of this application may include the following steps.

S501 to S507 are respectively the same as S401 to S407, and details are not described herein again.

S508: A base station performs precoding processing based on first channel information and second channel information, to obtain a precoding matrix. The first channel information may be represented as $Q_l^1$, and the second channel information may be represented as $V_{l,k}$.

For example, a difference between a precoding processing manner in S508 and a precoding processing manner in S309 lies in that in S508, the base station extracts first $\text{NLayer}_k$ columns of the second channel information $V_{l,k}$ to obtain a matrix $P_{l,k,op1}$, rather than extract first $\text{NLayer}_k$ columns of third channel information $\hat{V}_{l,k}$ to obtain the matrix $P_{l,k,op1}$. The matrix $P_{l,k,op1}$ satisfies:

$$P_{l,k,op1} = V_{l,k}\big[:,1:NLayer_{l,k}\big] \in \mathbb{C}^{\text{Ntrunc}\times\text{NLayer}_k}$$

Further, the base station combines matrices $P_{l,k,op1}$ corresponding to a plurality of UEs into $P_{k,op1}$:

$$P_{k,op1} = \big[P_{1,k,op1}, \dots, P_{l,k,op1}, \dots, P_{Nue,k,op1}\big] \in \mathbb{C}^{\text{Ntrunc}\times\text{NLayer}_k}$$

$P_{l,k,op1}$ of each UE may be determined based on $V_{l,k}$ fed back by the UE. *Nue* indicates a total quantity of the UEs. For a determining manner of $V_{l,k}$ fed back by each UE, refer to S401 to S407 or S501 to S507.

In addition, the base station may further calculate a precoding matrix $\widetilde{W}_{k,op1}^{zf}$ based on a zero forcing algorithm and based on $P_{k,op1}$:

$$\widetilde{W}_{k,op1}^{zf} = P_{k,op1} \cdot \big(P_{k,op1}^H \cdot P_{k,op1}\big)^{-1} \in \mathbb{C}^{Ntrunc\times NLayer_k}.$$

A difference between the precoding processing manner shown in S508 and the precoding processing manner shown in S309 further lies in that the base station may further perform normalization processing on $\widetilde{W}_{k,op1}^{zf}$ based on the first channel information $Q_l^1$, to obtain $W_{k,op1}^{zf}$:

$$W_{k,op1}^{zf} = Q_l^1 \frac{\widetilde{w}_{k,op1}^{zf}}{\sqrt{\Sigma_{i=1}^{Ntrunc}\big|\widetilde{w}_{k,op1}^{zf}[i,:]\big|^2}} \in \mathbb{C}^{N_{TX}\times NLayer_k}.$$

It can be learned that, in the procedure shown in FIG. 5, the third channel information does not need to participate, and the base station may obtain the precoding matrix based on the first channel information and the second channel information.

It may be understood that, in the procedure shown in FIG. 5, effect of reducing calculation complexity of the UE in a channel estimation process is the same as that in the procedure shown in FIG. 3. Therefore, for the effect, refer to the description of the procedure shown in FIG. 3. Details are not described herein again.

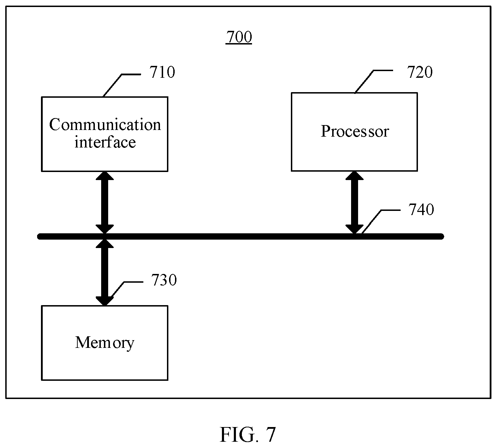

Based on the foregoing content and a same concept, FIG. 6 and FIG. 7 are diagrams of structures of possible channel measurement apparatuses according to this application. These apparatuses may be configured to implement functions of the terminal device or the network device in the foregoing method embodiments, and therefore can also implement beneficial effects of the foregoing method embodiments.

In this application, the apparatus may be any one of the terminal device or the network device shown in FIG. 1. This is not specifically required. If the apparatus is the terminal device, the apparatus may be configured to send and/or receive a reference signal. When the terminal device is configured to send the reference signal, the apparatus may be configured to perform an action performed by the first device in embodiments of this application. When the terminal device is configured to receive the reference signal, the apparatus may be configured to perform an action performed by the terminal device in embodiments of this application. When the apparatus is the network device, the apparatus may be configured to perform an action performed by the first device in embodiments of this application.

As shown in FIG. 6, the apparatus 600 includes a processing module 601 and a transceiver module 602.

The processing module 601 in the apparatus 600 may be configured to implement functions of the terminal device or the first device in the method embodiments shown in FIG. 2 to FIG. 5, for example, perform actions represented by using rectangular boxes in the flowcharts shown in FIG. 2 to FIG. 5. The transceiver module 602 may be configured to support communication between the apparatus 600 and another communication device. For example, when the apparatus 600 is the terminal device, the transceiver module 602 may be configured to communicate with the first device (for example, a network device) by the terminal device, for example, perform an action indicated by a connection line with an arrow in the flowcharts shown in FIG. 2 to FIG. 5.

FIG. 7 shows an apparatus 700 according to an embodiment of this application. Optionally, the apparatus shown in FIG. 7 may be an implementation of a hardware circuit of the apparatus shown in FIG. 6. The apparatus is applicable to the foregoing flowchart, and performs a function of the terminal device or the first device in the foregoing method embodiment.

For ease of description, FIG. 7 shows only main components of the apparatus.

The apparatus 700 shown in FIG. 7 includes a communication interface 710, a processor 720, and a memory 730. The memory 730 is configured to store program instructions and/or data. The processor 720 may cooperate with the memory 730 for operation. The processor 720 may execute the program instructions stored in the memory 730. When the instructions or the program stored in the memory 730 is executed, the processor 720 is configured to perform an operation performed by the processing module 601 in the foregoing embodiment, and the communication interface 710 is configured to perform an operation performed by the transceiver module 602 in the foregoing embodiment.

The memory 730 is coupled to the processor 720. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 730 may be included in the processor 720.

In embodiments of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function or a communication interface.

The apparatus 700 may further include a communication line 740. The communication interface 710, the processor 720, and the memory 730 may be connected to each other through the communication line 740. The communication line 740 may be a peripheral component interconnect (peripheral component interconnect, PCI) bus, an extended industry standard architecture (extended industry standard architecture, EISA) bus, or the like. The communication line 740 may be classified as an address bus, a data bus, a control bus, or the like. For ease of representation, only one bold line is used for representation in FIG. 7, but this does not mean that there is only one bus or only one type of bus.

An embodiment of this application further provides a computer-readable storage medium, including instructions. When the instructions are run on a computer, the computer is enabled to perform the method performed by the terminal device or the first device in embodiments shown in FIG. 2 to FIG. 5.

An embodiment of this application further provides a computer program product, including computer instructions. When the computer instructions are run on the computer, the computer is enabled to perform the method performed by the terminal device or the first device in embodiments shown in FIG. 2 to FIG. 5.

An embodiment of this application further provides a chip system, including a processor, where the processor is coupled to a memory, the memory is configured to store a program or instructions, and when the program or the instructions are executed by the processor, the chip system is enabled to perform the method performed by the terminal device or the first device in embodiments shown in FIG. 2 to FIG. 5.

An embodiment of this application further provides a communication system, including the terminal device and the first device in embodiments shown in FIG. 2 to FIG. 5.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

In one or more example designs, the functions described in this application may be implemented by using hardware, software, firmware, or any combination thereof. If the present invention is implemented by software, these functions may be stored in a computer-readable medium or are transmitted to the computer-readable medium in a form of one or more instructions or code. The computer-readable medium includes a computer storage medium and a communication medium that enables a computer program to move from one place to another. The storage media may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to carry or store program code, where the program code is in a form of instructions or a data structure or in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD), a floppy disk, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies in this application.

**Claims**

1. A channel measurement method, comprising:

    obtaining a first reference signal set and a second reference signal set, wherein the first reference signal set comprises N first reference signals, the second reference signal set comprises M second reference signals, and M and N are positive integers greater than or equal to 1;
    performing channel measurement based on the first reference signal set to obtain first channel information, wherein a first dimension of the first channel information is less than a quantity of transmit antennas of a first device; and
    obtaining second channel information based on the second reference signal set and the first channel information, wherein a first dimension of the second channel information is less than the quantity of transmit antennas of the first device.

2. The method according to claim 1, wherein the method further comprises:
    obtaining first information, wherein the first information comprises a first value, the first value is less than the quantity of transmit antennas of the first device, and the first dimension is less than or equal to the first value.

3. The method according to claim 2, wherein the first value is less than or equal to N.

4. The method according to claim 2 or 3, wherein the method further comprises:
sending an updated first value.

5. The method according to any one of claims 1 to 4, wherein the method further comprises:
sending the first channel information and the second channel information.

6. The method according to claim 5, wherein the method further comprises:
obtaining a feedback periodicity of the first channel information and/or a feedback periodicity of the second channel information.

7. The method according to any one of claims 1 to 4, wherein the method further comprises:
sending third channel information, wherein the third channel information is determined based on the first channel information and the second channel information, and a first dimension of the third channel information is less than the quantity of transmit antennas of the first device.

8. The method according to claim 7, wherein the method further comprises:
obtaining a feedback periodicity of the third channel information.

9. The method according to any one of claims 1 to 8, wherein the method further comprises:
obtaining second information, wherein the second information comprises at least one of a value of N, resource information of the first reference signal, and a sending periodicity of the first reference signal.

10. The method according to any one of claims 1 to 9, wherein the method further comprises:
obtaining third information, wherein the third information comprises at least one of a value of M, resource information of the second reference signal, and a sending periodicity of the second reference signal.

11. A channel measurement method, comprising:

sending a first reference signal set and a second reference signal set, wherein the first reference signal set comprises N first reference signals, the second reference signal set comprises M second reference signals, and M and N are positive integers greater than or equal to 1; and
receiving first channel information and second channel information, wherein a first dimension of the first channel information is less than a quantity of antennas of a first device, and a first dimension of the second channel information is less than the quantity of antennas of the first device; or
receiving third channel information, wherein the third channel information is determined based on the first channel information and the third channel information, and a first dimension of the third channel information is less than a quantity of antennas of a first device.

12. The method according to claim 11, wherein the method further comprises:
sending first information, wherein the first information comprises a first value, the first value is less than the quantity of transmit antennas of the first device, and the first dimension is less than or equal to the first value.

13. The method according to claim 12, wherein the first value is less than or equal to N.

14. The method according to claim 12 or 13, wherein the method further comprises:
receiving an updated first value.

15. The method according to any one of claims 11 to 14, wherein the method further comprises:
sending at least one of a feedback periodicity of the first channel information, a feedback periodicity of the second channel information, and a feedback periodicity of the third channel information.

16. The method according to any one of claims 11 to 15, wherein the method further comprises:
sending second information, wherein the second information comprises at least one of a value of N, resource information of the first reference signal, and a sending periodicity of the first reference signal.

17. The method according to any one of claims 11 to 16, wherein the method further comprises:
sending third information, wherein the third information comprises at least one of a value of M, resource information of the second reference signal, and a sending periodicity of the second reference signal.

18. A channel measurement apparatus, comprising a processor and a communication interface, wherein

the communication interface is configured to receive and send information; and
the processor is coupled to a memory, and is configured to invoke computer instructions in the memory, to perform, through the communication interface, the method according to any one of claims 1 to 10, or perform, through the communication interface, the method according to any one of claims 11 to 17.

19. A computer-readable storage medium, wherein the computer-readable storage medium stores computer-executable instructions; and when the computer-executable instructions are invoked by a computer, the method according to any one of claims 1 to 10 or the method according to any one of claims 11 to 17 is performed.

20. A computer program product, comprising instructions, wherein when the instructions are run on a computer, the method according to any one of claims 1 to 10 or the method according to any one of claims 11 to 17 is performed.

21. A chip, wherein the chip is coupled to a memory, and is configured to read and execute program instructions stored in the memory, to implement the method according to any one of claims 1 to 10, or implement the method according to any one of claims 11 to 17.

22. A communication system, comprising a communication apparatus configured to perform the method according to any one of claims 1 to 10, and a communication apparatus configured to perform the method according to any one of claims 11 to 17.

FIG. 1

S201: Obtain a first reference signal set and a second reference signal set

S202: Perform channel measurement based on the first reference signal set to obtain first channel information, where a first dimension of the first channel information is less than a quantity of transmit antennas of a sending device

S203: Obtain second channel information based on a second reference signal and the first channel information, where a first dimension of the second channel information is less than the quantity of transmit antennas of the sending device

FIG. 2

```
┌──────────────┐                                    ┌──────────────┐
│ Base station │                                    │      UE      │
└──────┬───────┘                                    └──────┬───────┘
       │                                                   │
       │         S301: First reference signal set          │
       ├──────────────────────────────────────────────────>│
       │   ┌───────────────────────────────────────────────┴───┐
       │   │ S302: Perform channel measurement based on the first│
       │   │ reference signal set to obtain a channel slowly     │
       │   │ varied matrix                                       │
       │   └───────────────────────────────────────────────┬───┘
       │   ┌───────────────────────────────────────────────┴───┐
       │   │ S303: Decompose the channel slowly varied matrix,   │
       │   │ and truncate a decomposition result based on a      │
       │   │ first value, to obtain first channel information     │
       │   └───────────────────────────────────────────────┬───┘
       │   S304: Send a second reference                    │
       │            signal set                              │
       ├──────────────────────────────────────────────────>│
       │   ┌───────────────────────────────────────────────┴───┐
       │   │ S305: Perform channel measurement on the second     │
       │   │ reference signal set to obtain a channel estimation  │
       │   │ matrix                                              │
       │   └───────────────────────────────────────────────┬───┘
       │   ┌───────────────────────────────────────────────┴───┐
       │   │ S306: Perform, based on the first channel            │
       │   │ information, dimension reduction and decomposition   │
       │   │ on a channel estimation matrix corresponding to a    │
       │   │ second reference signal, to obtain second channel    │
       │   │ information                                         │
       │   └───────────────────────────────────────────────┬───┘
       │   ┌───────────────────────────────────────────────┴───┐
       │   │ S307: Obtain third channel information based on the  │
       │   │ first channel information and the second channel     │
       │   │ information                                          │
       │   └───────────────────────────────────────────────┬───┘
       │        S308: Third channel information             │
       │<──────────────────────────────────────────────────┤
┌──────┴─────────────────────────────────────────┐         │
│ S309: Perform precoding based on the third       │         │
│ channel information, to obtain a precoding matrix │         │
└──────┬─────────────────────────────────────────┘         │
       │                                                   │
```

FIG. 3

Base station | UE

S401: First reference signal set

S402: Perform channel measurement based on the first reference signal set to obtain a channel slowly varied matrix

S403: Decompose the channel slowly varied matrix, and truncate a decomposition result based on a first value, to obtain first channel information

S404: Send a second reference signal set

S405: Perform channel measurement on the second reference signal set to obtain a channel estimation matrix

S406: Perform, based on the first channel information, dimension reduction and decomposition on a channel estimation matrix corresponding to a second reference signal, to obtain second channel information

S407: First channel information and second channel information

S408: Obtain third channel information based on the first channel information and the second channel information

S409: Perform precoding based on the third channel information, to obtain a precoding matrix

FIG. 4

Base station | UE

S501: First reference signal set

S502: Perform channel measurement based on the first reference signal set to obtain a channel slowly varied matrix

S503: Decompose the channel slowly varied matrix, and truncate a decomposition result based on a first value, to obtain first channel information

S504: Send a second reference signal set

S505: Perform channel measurement on the second reference signal set to obtain a channel estimation matrix

S506: Perform, based on the first channel information, dimension reduction and decomposition on a channel estimation matrix corresponding to a second reference signal, to obtain second channel information

S507: First channel information and second channel information

S508: Perform precoding based on the first channel information and the second channel information, to obtain a precoding matrix

FIG. 5

Channel measurement apparatus 600

Processing module 601

Transceiver module 602

FIG. 6

700

710

Communication
interface

720

Processor

740

730

Memory

FIG. 7

## INTERNATIONAL SEARCH REPORT

International application No.

**PCT/CN2023/094725**

### A. CLASSIFICATION OF SUBJECT MATTER

H04W24/10(2009.01)i

According to International Patent Classification (IPC) or to both national classification and IPC

### B. FIELDS SEARCHED

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

DWPI, ENTXT, CNTXT, CNKI, 3GPP: 参考信号, 集合, 维度, 天线, 数量, 周期, 资源, reference signal, set, dimension, antenna, number, period, resource,

### C. DOCUMENTS CONSIDERED TO BE RELEVANT

| Category* | Citation of document, with indication, where appropriate, of the relevant passages | Relevant to claim No. |
|---|---|---|
| A | WO 2015131378 A1 (HUAWEI TECHNOLOGIES CO., LTD.) 11 September 2015 (2015-09-11)<br>description, page 2, line 23-page 9, line 1 | 1-22 |
| A | CN 105871515 A (CHINA ACADEMY OF TELECOMMUNICATIONS TECHNOLOGY) 17 August 2016 (2016-08-17)<br>entire document | 1-22 |
| A | CN 108092697 A (ZTE CORP.) 29 May 2018 (2018-05-29)<br>entire document | 1-22 |
| A | CN 108540178 A (SHANGHAI LANGBO COMMUNICATION TECHNOLOGY CO., LTD.) 14 September 2018 (2018-09-14)<br>entire document | 1-22 |
| A | WO 2016111427 A1 (LG ELECTRONICS INC.) 14 July 2016 (2016-07-14)<br>entire document | 1-22 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 June 2023** | **19 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/094725**

**C.      DOCUMENTS CONSIDERED TO BE RELEVANT**

| Category* | Citation of document, with indication, where appropriate, of the relevant passages | Relevant to claim No. |
|---|---|---|
| A | NTT DOCOMO et al. "R1-063305 "Reference Signal Structure for 2-Tx MIMO in E-UTRA Downlink""<br>*3GPP tsg_ran\WG1_RL1*, No. TSGR1_47, 02 November 2006 (2006-11-02),<br>      entire document | 1-22 |

Form PCT/ISA/210 (second sheet) (July 2022)

**INTERNATIONAL SEARCH REPORT**
**Information on patent family members**

International application No.

**PCT/CN2023/094725**

| Patent document cited in search report | | | Publication date (day/month/year) | Patent family member(s) | | | Publication date (day/month/year) |
|---|---|---|---|---|---|---|---|
| WO | 2015131378 | A1 | 11 September 2015 | US | 2016380734 | A1 | 29 December 2016 |
| | | | | EP | 3116258 | A1 | 11 January 2017 |
| | | | | EP | 3429257 | A1 | 16 January 2019 |
| | | | | KR | 20160129057 | A | 08 November 2016 |
| | | | | BR | 112016020503 | A2 | 10 July 2018 |
| | | | | PT | 3116258 | T | 19 October 2018 |
| | | | | CN | 105210405 | A | 30 December 2015 |
| CN | 105871515 | A | 17 August 2016 | WO | 2016116006 | A1 | 28 July 2016 |
| | | | | TW | 201628359 | A | 01 August 2016 |
| CN | 108092697 | A | 29 May 2018 | WO | 2018206017 | A1 | 15 November 2018 |
| CN | 108540178 | A | 14 September 2018 | | None | | |
| WO | 2016111427 | A1 | 14 July 2016 | US | 2017331541 | A1 | 16 November 2017 |
| | | | | US | 2017353221 | A1 | 07 December 2017 |

Form PCT/ISA/210 (patent family annex) (July 2022)

## REFERENCES CITED IN THE DESCRIPTION

**Patent documents cited in the description**

- CN 202210541819